# EUROPÄISCHE PATENTSCHRIFT

(11) **EP 2 449 338 B1**
(45) Veröffentlichungstag und Bekanntmachung des Hinweises auf die Patenterteilung: **14.08.2013**
(21) Anmeldenummer: 10720794.6
(22) Anmeldetag: 07.06.2010
(51) Int. Cl.: G01B 11/06, G01B 21/08, D21F 7/06, G01B 7/06

(54) **VERFAHREN UND VORRICHTUNG ZUR BERÜHRUNGSLOSEN BESTIMMUNG DER DICKE EINER MATERIALBAHN MIT KORREKTUR DES AUSRICHTFEHLERS**
METHOD AND APPARATUS FOR THE CONTACTLESS DETERMINATION OF THE THICKNESS OF A WEB OF MATERIAL, INCLUDING CORRECTION OF THE ALIGNMENT ERROR
PROCÉDÉ ET DISPOSITIF DESTINÉS À LA DÉTERMINATION SANS CONTACT DE L'ÉPAISSEUR D'UNE BANDE DE MATÉRIAU AVEC CORRECTION DU DÉFAUT D'ALIGNEMENT

(30) Priorität: 02.07.2009 US 222648 P
(43) Veröffentlichungstag der Anmeldung: 09.05.2012
(73) Patentinhaber: Voith Patent GmbH, 89522 Heidenheim (DE)
(72) Erfinder: TYPPO, Pekka, Pearland Texas 77584 (US); KNABE, Willy, 89522 Heidenheim (DE); BRÖCKEL, Jörg, 89547 Gerstetten (DE)
(86) Internationale Anmeldenummer: PCT/EP2010/057885
(87) Internationale Veröffentlichungsnummer: WO 2011/000665

(56) Entgegenhaltungen:
- EP-A1- 0 843 155
- WO-A1-99/44012
- WO-A1-2006/068949
- US-A1- 2009 056 156

## Beschreibung

Die Erfindung betrifft ein Verfahren zur berührungslosen Bestimmung der Dicke einer Materialbahn, insbesondere Faserstoffbahn, mittels einer Sensoranordnung, die wenigstens zwei optische Messeinheiten umfasst, zwischen denen die Materialbahn hindurchführbar ist und die auf ihrer der Materialbahn zugewandten Seite jeweils eine Messplatte aufweisen, wobei über die auf einander gegenüberliegenden Seiten der Materialbahn angeordneten optischen Messeinheiten jeweils deren Abstand zur Materialbahn ermittelt und mittels einer Auswerteeinheit aus den ermittelten Abständen zwischen diesen optischen Messeinheiten und der Materialbahn sowie dem Abstand zwischen diesen auf einander gegenüberliegenden Seiten der Materialbahn angeordneten optischen Messeinheiten die Dicke der Materialbahn bestimmt wird. Sie betrifft ferner eine Vorrichtung der im Oberbegriff des Anspruchs 7 angegebenen Art.

Bei der Faserstoffbahn kann es sich insbesondere um eine Papier- oder Kartonbahn handeln.

Optische Dickensensoren zur berührungslosen Bestimmung der Dicke einer Materialbahn, insbesondere Faserstoffbahn, sind aus den Druckschriften EP 1 855 082 A1, WO99/44012 A1, US2009/0056156 A1, WO 2006/068949 A1, EP 0843155 und EP 1 855 083 A1 bekannt.

Bei der berührungslosen Dickenmessung von Papier sind einerseits der Abstand zwischen den aufeinander gegenüberliegenden Seiten der Materialbahn angeordneten optischen Messeinheiten bzw. Messplatten und andererseits die Abstände zwischen diesen Messeinheiten bzw. Messplatten und der Materialbahn zu ermitteln, wobei die Abstände zwischen den Messeinheiten und der Materialbahn durch eine optische Messung erfolgt. Dabei müssen die auf einander gegenüberliegenden Seiten der Materialbahn positionierten optischen Messeinheiten exakt in derselben optischen Achse angeordnet sein, um Fehlmessungen durch eine nicht senkrecht zur optischen Achse verlaufende Papierbahn zu beseitigen.

Insbesondere durch den Luftstau der bewegten Papierbahn kann es jedoch zu einer Schrägstellung zwischen den auf einander gegenüberliegenden Seiten der Materialbahn vorgesehenen optischen Messeinheiten oder Messköpfe kommen, was einen fehlerhaften Materialbahndickenwert zur Folge hat.

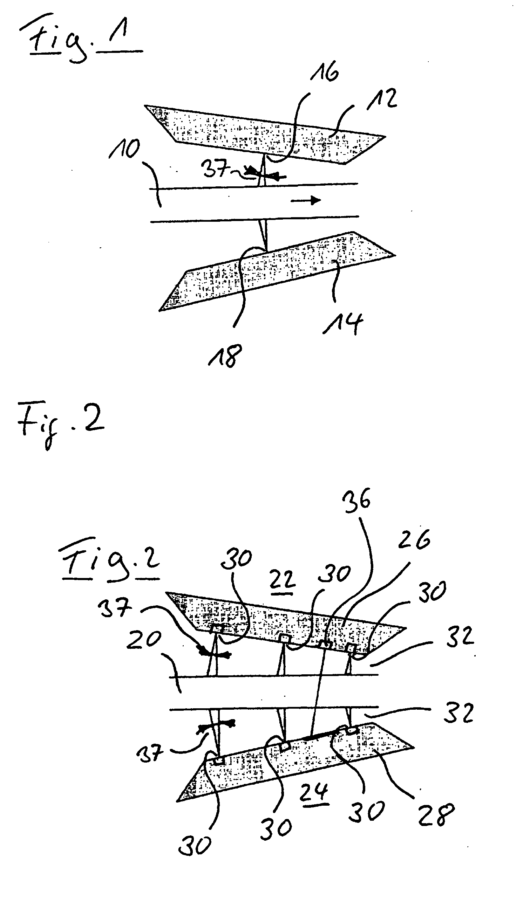

Ein solcher beispielsweise durch den Luftstau der bewegten Material- bzw. Faserstoffbahn 10 hervorgerufenen Schrägstellung zwischen einer oberen und einer unteren optischen Messeinheit bzw. deren Messplatten 12, 14 kann der Fig. 1 entnommen werden, die in schematischer Darstellung eine herkömmliche Vorrichtung zur berührungslosen Dickenbestimmung zeigt, bei der einer jeweiligen Messeinheit jeweils nur ein optischer Sensor 16 bzw. 18 zugeordnet ist. Bei einer solchen herkömmlichen Vorrichtung kann die Schrägstellung der Messplatten 12, 14 und ein eventueller Versatz zwischen der oberen und der unteren optischen Messeinheit bzw. deren Messplatten 12, 14 nicht kompensiert werden. Es ergibt sich also bei einer solchen herkömmlichen Vorrichtung mit nur einem Strahlengang auf einer jeweiligen Materialbahnseite eine ungenaue Messung.

Wenn es zusätzlich noch zu einem Versatz zwischen oberem und unteren Sensor kommt, führt dies dazu, dass ein zusätzlicher Fehler bei der Materialdickenmessung entsteht. Ein Versatz kann durch einen Ausrichtfehler zwischen oberen und unterem Sensorwagen hervorgerufen werden oder über die Schrägstellung der Messköpfe.

Der Erfindung liegt die Aufgabe zugrunde, ein verbessertes Verfahren sowie eine verbesserte Vorrichtung der eingangs genannten Art zu schaffen, bei denen entsprechende Fehlmessungen kompensiert werden und mit denen eine genauere Messung erzielt wird.

Erfindungsgemäß wird, gemäß Anspruch 1, diese Aufgabe bezüglich des Verfahrens dadurch gelöst, dass den auf einander gegenüberliegenden Seiten der Materialbahn angeordneten optischen Messeinheiten jeweils mehrere voneinander beabstandete optische Sensoren zugeordnet werden und dass mittels der Auswerteeinheit anhand der über die optischen Sensoren erhaltenen Messwerte eine Korrektur der Materialbahndicke erfolgt.

Dazu werden mittels der Auswerteeinheit anhand der über die optischen Sensoren erhaltenen Messwerte die Kippwinkel der Messplatten zur Materialbahn ermittelt.

Der ermittelte Kippwinkel der Messplatten zur Materialbahn wird dann mittels der Auswerteinheit zur Korrektur des Materialbahndickenwertes herangezogen.

Aufgrund dieser Ausgestaltung kann bei der Bestimmung der Materialbahndicke nunmehr auch ein eventueller Schrägstellung der Messplatten kompensiert werden. Eine Optimierung der Korrektur des Materialbahndickenwertes wird durch die Wahl möglichst großer Abstände zwischen den optischen Sensoren einer jeweiligen optischen Messeinheit erreicht. Die optischen Sensoren einer jeweiligen optischen Messeinheit können insbesondere in die betreffenden Messplatten eingebaut werden.

Bevorzugt werden den auf einander gegenüberliegenden Seiten der Materialbahn angeordneten optischen Messeinheiten jeweils wenigstens drei voneinander beabstandete optische Sensoren zugeordnet.

Gemäß einer bevorzugten praktischen Ausgestaltung des erfindungsgemäßen Verfahrens werden den auf einander gegenüberliegenden Seiten der Materialbahn angeordneten optischen Messeinheiten jeweils nur drei voneinander beabstandete optische Sensoren zugeordnet, so dass jeweils eine Dreipunktmessung möglich ist.

Der Abstand zwischen den aufeinander gegenüberliegenden Seiten der Materialbahn angeordneten optischen Messeinheiten wird bevorzugt magnetisch ermittelt.

Zur weiteren verbesserten Korrektur des Materialbahndickenwertes wird Erfindungsgemäß zusätzlich der Versatz zwischen den einander gegenüberliegenden Seiten der Materialbahn angeordneten Messplatten über eine xy- Messeinheit ermittelt.

Erfindungsgemäß wird der Versatz mittels einer optischen xy- Messeinheit, bestehend aus einem optischen 2*2 Detektor in der einen Messplatte und einer eingelassenen Lichtquelle in der gegenüberliegenden Messplatte, ermittelt.

Die Auswerteeinheit ist dazu mit einem entsprechenden Algorithmus versehen, über den sich der Kippwinkel und der Versatz bestimmen und das Signal der jeweiligen optischen Messeinheit entsprechend korrigieren lässt.

Zweckmäßigerweise wird zwischen jeder einer jeweiligen optischen Messeinheit zugeordneten Messplatte und der Materialbahn ein Luftkissen erzeugt, um die Messeinheiten im Abstand von der Materialbahn zu halten.

Die erfindungsgemäße Vorrichtung gemäß Anspruch 6 zeichnet sich dadurch aus, dass die auf einander gegenüberliegenden Seiten der Materialbahn angeordneten optischen Messeinheiten jeweils mehrere voneinander beabstandete optische Sensoren umfassen und dass die Auswerteeinheit ausgeführt ist, anhand der über die optischen Sensoren erhaltenen Messwerte den Kippwinkel der Messplatten zur Materialbahn zu ermittelt.

Die Auswerteinheit ist zudem dazu ausgeführt, die ermittelten Kippwinkel der Messplatten zur Materialbahn zur Korrektur des Materialbahndickenwertes heranzuziehen.

Zu weiteren Verbesserung der Genauigkeit ist eine xy- Messeinheit vorgesehen, die den Versatz zwischen den einander gegenüberliegenden Seiten der Materialbahn angeordneten Messplatten ermittelt.

Erfindungsgemäß arbeitet die xy- Messeinheit optisch und besteht aus einem optischen 2x2 Detektor in der einen Messplatten und einer eingelassenen Lichtquelle in der gegenüberliegenden Messplatte.

Weitere bevorzugte Ausführungsformen der erfindungsgemäßen Vorrichtung sind in den abhängigen Ansprüchen angegeben.

Mit der erfindungsgemäßen Lösung wird die Messgenauigkeit deutlich erhöht. Dabei kann insbesondere eine Messung mit drei Strahlengängen auf jeder Materialbahnseite und vorzugsweise einer optischen Triggerung erfolgen, um den Versatz zu ermitteln. Es können beispielsweise Pin-Dioden mit Lambert-Karakteristik eingesetzt werden. Mit den auf jeder Materialbahnseite jeweils vorgesehenen drei Strahlengängen kann zusätzlich noch eine Schiefstellung kompensiert werden. Die Aufteilung der Strahlengänge in x- und y-Richtung kann unterschiedlich sein. Es ist eine Lichtquelle für alle Strahlengänge auf einer jeweiligen Materialbahnseite denkbar.

Im Übrigen kann ein jeweiliger optischer Sensor insbesondere so ausgeführt sein, wie dies in der EP 1 855 082 A1 oder EP 1 855 083 A1 beschrieben ist.

So ist aus der EP 1 855 082 A1 beispielsweise ein optischer Sensor mit einer Einrichtung zur Bestimmung der Entfernung zu einem Objekt bekannt, bei der zumindest eine Linsenanordnung vorgesehen ist, um Licht von einer Lichtquelle, insbesondere Laserlichtquelle, auf das Objekt zu fokussieren und vom Objekt reflektiertes und zurück gestreutes Licht zu sammeln, eine Lochblende mit einer kreisförmigen Öffnung vorgesehen ist, um aus dem reflektierten und zurück gestreuten Licht einen kreisförmigen Lichtstrahl zu bilden, und ein den kreisförmigen Lichtstrahl empfangendes Detektorsystem vorgesehen ist, das auf den Lichtstrahldurchmesser anspricht, wobei die Bestimmung des Abstandes zu dem Objekt auf der Basis von Signalen vom Detektorsystem erfolgt. Ein insbesondere dem Detektorsystem zugeordneter Analysator kann zur Bestimmung der Dicke des Objekts ausgeführt sein. Dabei kann auf beiden Seiten des Objekts jeweils wenigstens eine Linsenanordnung vorgesehen sein, und die auf unterschiedlichen Seiten angeordneten Linsenanordnungen können einen definierten Abstand voneinander aufweisen. Die Dicke des Objekts kann in diesem Fall insbesondere dadurch bestimmt werden, dass die jeweils ermittelten Abstände zwischen den auf den beiden Seiten des Objekts vorgesehenen Linsenanordnungen zum Objekt aufsummiert werden und die erhaltene Summe vom definierten bzw. ermittelten Abstand zwischen den Linsenanordnungen subtrahiert wird.

In der EP 1 855 083 A1 ist ein vergleichbarer optischer Sensor beschrieben, bei dem eine Lichtquelle geringer Kohärenz verwendet wird, die insbesondere eine Superlumineszenzdiode umfassen kann. Zwischen einer jeweiligen Linsenanordnung und dem Objekt kann ein optisches Fenster vorgesehen sein.

Die Erfindung wird im Folgenden anhand eines Ausführungsbeispiels unter Bezugnahme auf die Zeichnung näher erläutert; in dieser zeigen:
- Fig. 1: eine schematische Teildarstellung einer herkömmlichen Vorrichtung zur berührungslosen Dickenbestimmung und
- Fig. 2: eine schematische Teildarstellung einer beispielhaften Ausführungsform einer Vorrichtung zur berührungslosen Bestimmung der Dicke einer Materialbahn.
- Fig 3: eine schematische Teildarstellung einer Ausführungsform der erfindungsgemäßen Vorrichtung

Fig. 2 zeigt in schematischer Teildarstellung ein Beispiel einer Vorrichtung zur berührungslosen Bestimmung der Dicke einer Materialbahn 20, bei der es sich beispielsweise um eine Faserstoffbahn, insbesondere Papier- oder Kartonbahn handeln kann.

Die Vorrichtung umfasst eine Sensoranordnung mit wenigstens zwei optischen Messeinheiten 22, 24, zwischen denen die Materialbahn 20 hindurchführbar ist und die auf ihrer der Materialbahn 20 zugewandten Seite jeweils eine Messplatte 26, 28 aufweisen.

Dabei ist über die auf einander gegenüberliegenden Seiten der Materialbahn 20 angeordneten optischen Messeinheiten 22, 24 jeweils deren Abstand zur Materialbahn 20 ermittelbar. Mittels einer Auswerteeinheit wird dann aus den ermittelten Abständen zwischen diesen optischen Messeinheiten 22, 24 und der Materialbahn 20 sowie dem Abstand zwischen diesen auf einander gegenüberliegenden Seiten der Materialbahn 20 angeordneten optischen Messeinheiten 22, 24 die Dicke der Materialbahn 20 bestimmt.

Die auf einander gegenüberliegenden Seiten der Materialbahn 20 angeordneten optischen Messeinheiten 22, 24 umfassen jeweils mehrere voneinander beabstandete optische Sensoren 30.

Hierbei können die auf einander gegenüberliegenden Seiten der Materialbahn 20 angeordneten optischen Messeinheiten 22, 24 jeweils wenigstens drei voneinander beabstandete optische Sensoren 30 umfassen.

Beim vorliegenden Beispiel umfassen die auf einander gegenüberliegenden Seiten der Materialbahn 20 angeordneten optischen Messeinheiten 22, 24 jeweils nur drei voneinander beabstandete optische Sensoren 30.

Zudem können Mittel vorgesehen sein, um den Abstand zwischen den auf einander gegenüberliegenden Seiten der Materialbahn 20 angeordneten optischen Messeinheiten 22, 24 bzw. Messplatten 26, 28 magnetisch zu ermitteln.

Dies können beispielsweise 3 magnetische Sensoren sein, die jeweils einem der drei optischen Sensoren zugeordnet sind.

Zweckmäßigerweise sind auch Mittel vorgesehen, um zwischen jeder einer jeweiligen optischen Messeinheit 22, 24 zugeordneten Messplatte 26, 28 und der Materialbahn 20 ein Luftkissen 32 zu erzeugen und dadurch die Messeinheiten 22, 24 im Abstand von der Materialbahn 20 zu erhalten.

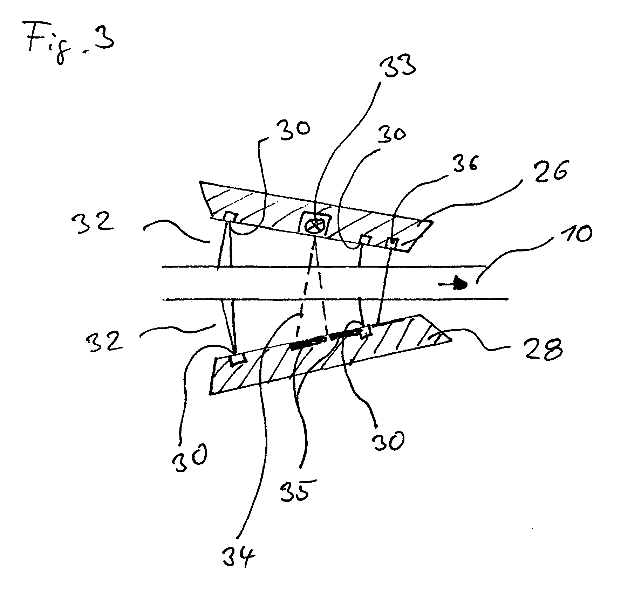

Fig. 3 zeigt eine erfindungsgemäße Ausführungsform die zusätzlich eine xy-Messeinheit aufweißt, die aus einer Lichtquelle 33 in der oberen Messplatte, deren Strahl 34 auf den 2x2 Detektor 35 fällt, besteht und somit eine Aussage über den Versatz der oberen zur unteren Messplatte 26,28 erlaubt.

Die Lichtquelle muss dabei so gewählt werden, dass der Lichtstrahl 34 die Materialbahn durchdringen kann und ein messbares Signal auf dem Detektorfläche hervorruft.

Dabei ist die Auswerteeinheit ausgeführt, anhand der über die optischen Sensoren 30 erhaltenen Messwerte den Kippwinkel der Messplatten 26, 28 zur Materialbahn 20 und den Versatz , der über die xy-Messeinheit ermittelt wird, zwischen den auf einander gegenüberliegenden Seiten der Materialbahn 20 angeordneten optischen Messeinheiten 22, 24 bzw. deren Messplatten 26, 28 zu ermitteln.

Die Auswerteeinheit ist insbesondere ausgeführt, den ermittelten Kippwinkel der Messplatten 26, 28 zur Materialbahn 20 und den ermittelten Versatz zwischen den auf einander gegenüberliegenden Seiten der Materialbahn 20 angeordneten optischen Messeinheiten 22, 24 bzw. deren Messplatten 26, 28 zur Korrektur des Materialbahndickenwertes heranzuziehen.

Wie bereits erwähnt, können im Übrigen die optischen Sensoren 30 so ausgeführt sein, wie dies in der EP 1 855 082 A1 und EP 1 855 083 A1 beschrieben ist.

### Bezugszeichenliste

- 10: Materialbahn
- 12: Messplatte
- 14: Messplatte
- 16: optischer Sensor
- 18: optischer Sensor
- 20: Materialbahn
- 22: optische Messeinheit
- 24: optische Messeinheit
- 26: Messplatte
- 28: Messplatte
- 30: optischer Sensor
- 32: Luftkissen
- 33: Lichtquelle
- 34: Lichtstrahl
- 35: 2x2 Detektor
- 36: magnetischer Sensor
- 37: Kippwickel

## Patentansprüche

1. Verfahren zur berührungslosen Bestimmung der Dicke einer Materialbahn (20), insbesondere Faserstoffbahn, mittels einer Sensoranordnung, die wenigstens zwei optische Messeinheiten (22, 24) umfasst, zwischen denen die Materialbahn (20) hindurchführbar ist und die auf ihrer der Materialbahn (20) zugewandten Seite jeweils eine Messplatte (26, 28) aufweisen, wobei über die auf einander gegenüberliegenden Seiten der Materialbahn (20) angeordneten optischen Messeinheiten (22, 24) jeweils deren Abstand zur Materialbahn (20) ermittelt und mittels einer Auswerteeinheit aus den ermittelten Abständen zwischen diesen optischen Messeinheiten (22, 24) und der Materialbahn (20) sowie dem Abstand zwischen diesen auf einander gegenüberliegenden Seiten der Materialbahn (20) angeordneten optischen Messeinheiten (22, 24) die Dicke der Materialbahn (20) bestimmt wird, wobei den auf einander gegenüberliegenden Seiten der Materialbahn (20) angeordneten optischen Messeinheiten (22, 24) jeweils mehrere voneinander beabstandete optische Sensoren (30) zugeordnet werden und dass mittels der Auswerteeinheit anhand der über die optischen Sensoren (30) erhaltenen Messwerte der Kippwinkel (37) der Messplatten (26, 28) zur Materialbahn (20) ermittelt werden,
**dadurch gekennzeichnet,**
**dass** der Versatz zwischen den auf den einander gegenüberliegenden Seiten der Materialbahn angeordneten Messplatten über eine optische xy-Messeinheit bestehend aus einem optischen 2x2 Detektor (35) in der einen Messplatte (26,28) und einer eingelassenen Lichtquelle (33) in der gegenüberliegenden Messplatte (26,28) ermittelt wird.

2. Verfahren nach Anspruch 1,
**dadurch gekennzeichnet,**
**dass** mittels der Auswerteinheit die ermittelten Kippwinkel (37) zur Korrektur des Materialbahndickenwertes herangezogen werden.

3. Verfahren nach Anspruch 1,
**dadurch gekennzeichnet,**
**dass** den auf einander gegenüberliegenden Seiten der Materialbahn (20) angeordneten optischen Messeinheiten (22, 24) jeweils wenigstens drei voneinander beabstandete optische Sensoren (30) zugeordnet werden.

4. Verfahren nach einem der vorhergehenden Ansprüche,
**dadurch gekennzeichnet,**
**dass** der Abstand zwischen den auf einander gegenüberliegenden Seiten der Materialbahn (20) angeordneten optischen Messeinheiten (22, 24) magnetisch ermittelt wird.

5. Verfahren nach einem der vorhergehenden Ansprüche,
**dadurch gekennzeichnet,**
**dass** zwischen jeder einer jeweiligen optischen Messeinheit (22, 24) zugeordneten Messplatte (26, 28) und der Materialbahn (20) ein Luftkissen (32) erzeugt wird, um die Messeinheiten (22, 24) im Abstand von der Materialbahn (20) zu halten.

6. Vorrichtung zur berührungslosen Bestimmung der Dicke einer Materialbahn (20), insbesondere Faserstoffbahn, insbesondere zur Durchführung des Verfahrens nach einem der vorhergehenden Ansprüche, mit einer Sensoranordnung, die wenigstens zwei optischen Messeinheiten (22, 24) umfasst, zwischen denen die Materialbahn (20) hindurchführbar ist und die auf ihrer der Materialbahn (20) zugewandten Seite jeweils eine Messplatte (26, 28) aufweisen, wobei über die auf einander gegenüberliegenden Seiten der Materialbahn (20) angeordneten optischen Messeinheiten (22, 24) jeweils deren Abstand zur Materialbahn (20) ermittelbar und mittels einer Auswerteeinheit aus den ermittelten Abständen zwischen diesen optischen Messeinheiten (22, 24) und der Materialbahn (20) sowie dem Abstand zwischen diesen auf einander gegenüberliegenden Seiten der Materialbahn (20) angeordneten optischen Messeinheiten (22, 24) die Dicke der Materialbahn (20) bestimmbar ist, wobei den auf einander gegenüberliegenden Seiten der Materialbahn (20) angeordneten optischen Messeinheiten (22, 24) jeweils mehrere voneinander beabstandete optische Sensoren (30) zugeordnet werden und dass die Auswerteeinheit ausgeführt ist, anhand der über die optischen Sensoren (30) erhaltenen Messwerte den Kippwinkel (37) der Messplatten (26, 28) zur Materialbahn (20) zu ermitteln,
**dadurch gekennzeichnet,**
**dass** eine optische xy-Messeinheit vorhanden ist, die aus einem 2x2 Detektor (35) in der einen Messplatte und einer eingelassenen Lichtquelle (33) in der gegenüberliegenden Messplatte besteht und die ausgeführt ist, den Versatz zwischen den auf den einander gegenüberliegenden Seiten der Materialbahn angeordneten Messplatten zu ermitteln.

7. Vorrichtung nach Anspruch 6,
**dadurch gekennzeichnet,**
**dass** die Auswerteeinheit ausgeführt ist, die ermittelten Kippwinkel (37) der Messplatten (26, 28) zur Materialbahn (20) zur Korrektur des Materialbahndickenwertes heranzuziehen.

8. Vorrichtung nach einem der Ansprüche 6 oder 7,
**dadurch gekennzeichnet,**
**dass** die auf einander gegenüberliegenden Seiten der Materialbahn (20) angeordneten optischen Messeinheiten (22, 24) jeweils wenigstens drei voneinander beabstandete optische Sensoren (30) umfassen.

9. Vorrichtung nach einem der Ansprüche 6 bis 8,
**dadurch gekennzeichnet,**
**dass** Mittel vorgesehen sind, um den Abstand zwischen den auf einander gegenüberliegenden Seiten der Materialbahn (20) angeordneten optischen Messeinheiten (22, 24) magnetisch zu ermitteln.

10. Vorrichtung nach einem der Ansprüche 6 bis 9,
**dadurch gekennzeichnet,**
**dass** Mittel vorgesehen sind, um zwischen jeder einer jeweiligen optischen Messeinheit (22, 24) zugeordneten Messplatte (26, 28) und der Materialbahn (20) ein Luftkissen (32) zu erzeugen und dadurch die Messeinheiten (22, 24) im Abstand von der Materialbahn (20) zu halten.

## Claims

1. Method for the contactless determination of the thickness of a material web (20), in particular a fibrous web, by means of a sensor arrangement, which comprises at least two optical measuring units (22, 24), between which the material web (20) can be led and which, on their side facing the material web (20), each have a measuring plate (26, 28), where, via the optical measuring units (22, 24) arranged on mutually opposite sides of the material web (20), in each case their distance from the material web (20) is determined and, by means of an evaluation unit, by using the determined distances between these optical measuring units (22, 24) and the material web (20) and also the distance between these optical measuring units (22, 24) arranged on mutually opposite sides of the material web (20), the thickness of the material web (20) is determined, where the optical measuring units (22, 24) arranged on mutually opposite sides of the material web (20) are each assigned a plurality of optical sensors (30) spaced apart from one another and, by means of the evaluation unit, the tilt angles (37) of the measuring plates (26, 28) with respect to the material web (20) are determined from the measured values obtained via the optical sensors (30),
**characterized in that**
the offset between the measuring plates arranged on the mutually opposite sides of the material web is determined by an optical xy measuring unit comprising an optical 2 x 2 detector (35) in one measuring plate (26, 28) and a embedded light source (33) in the opposite measuring plate (26, 28).

2. Method according to Claim 1,
**characterized in that**
by means of the evaluation unit, the determined tilt angles (37) are used to correct the material web thickness value.

3. Method according to Claim 1,
**characterized in that**
the optical measuring units (22, 24) arranged on mutually opposite sides of the material web (20) are each assigned at least three optical sensors (30) spaced apart from one another.

4. Method according to one of the preceding claims,
**characterized in that**
the distance between the optical measuring units (22, 24) arranged on mutually opposite sides of the material web (20) is determined magnetically.

5. Method according to one of the preceding claims,
**characterized in that**
an air cushion (32) is generated between each measuring plate (26, 28) assigned to a respective optical measuring unit (22, 24) and the material web (20), in order to keep the measuring units (22, 24) at a distance from the material web (20).

6. Apparatus for the contactless determination of the thickness of a material web (20), in particular a fibrous web, in particular for carrying out the method according to one of the preceding claims, having a sensor arrangement, which comprises at least two optical measuring units (22, 24), between which the material web (20) can be led and which, on their side facing the material web (20), each have a measuring plate (26, 28), where, via the optical measuring units (22, 24) arranged on mutually opposite sides of the material web (20), in each case their distance from the material web (20) can be determined and, by means of an evaluation unit, by using the determined distances between these optical measuring units (22, 24) and the material web (20) and also the distance between these optical measuring units (22, 24) arranged on mutually opposite sides of the material web (20), the thickness of the material web (20) can be determined, where the optical measuring units (22, 24) arranged on mutually opposite sides of the material web (20) are each assigned a plurality of optical sensors (30) spaced apart from one another and the evaluation unit is designed to determine the tilt angles (37) of the measuring plates (26, 28) with respect to the material web (20) from the measured values obtained via the optical sensors (30),
**characterized in that**
there is an optical xy measuring unit, which comprises a 2 x 2 detector (35) in one measuring plate and an embedded light source (33) in the opposite measuring plate, and which is designed to determine the offset between the measuring plates arranged on the mutually opposite sides of the material web.

7. Apparatus according to Claim 6,
**characterized in that**
the evaluation unit is designed to use the determined tilt angles (37) of the measuring plates (26, 28) with respect to the material web (20) to correct the material web thickness value.

8. Apparatus according to either of Claims 6 and 7,
**characterized in that**
the optical measuring units (22, 24) arranged on mutually opposite sides of the material web (20) each comprise at least three optical sensors (30) spaced apart from one another.

9. Apparatus according to one of Claims 6 to 8,
**characterized in that**
means are provided to determine the distance between the optical measuring units (22, 24) arranged on mutually opposite sides of the material web (20) magnetically.

10. Apparatus according to one of Claims 6 to 9,
**characterized in that**
means are provided in order to generate an air cushion (32) between each measuring plate (26, 28) assigned to a respective optical measuring unit (22, 24) and the material web (20) and, as a result, to keep the measuring units (22, 24) at a distance from the material web (20).

## Revendications

1. Procédé de détermination sans contact de l'épaisseur d'une bande de matière (20), notamment une bande de matière fibreuse, au moyen d'un arrangement de détection qui comprend au moins deux unités de mesure optiques (22, 24) entre lesquelles peut défiler la bande de matière (20) et qui présentent respectivement une plaque de mesure (26, 28) sur leur côté faisant face à la bande de matière (20), l'écart par rapport à la bande de matière (20) des unités de mesure optiques (22, 24) disposées sur des côtés opposés l'un à l'autre de la bande de matière (20) étant à chaque fois déterminé par le biais de celles-ci et l'épaisseur de la bande de matière (20) étant déterminée au moyen d'une unité d'interprétation à partir des écarts déterminés entre ces unités de mesure optiques (22, 24) et la bande de matière (20) ainsi que l'écart entre ces unités de mesure optiques (22, 24) disposées sur des côtés opposés l'un à l'autre de la bande de matière (20), plusieurs capteurs optiques (30) espacés les uns des autres étant respectivement associés aux unités de mesure optiques (22, 24) disposées sur des côtés opposés l'un à l'autre de la bande de matière (20) et les angles de basculement (37) des plaques de mesure (26, 28) par rapport à la bande de matière (20) étant déterminés au moyen de l'unité d'interprétation à l'aide des valeurs mesurées obtenues par le biais des capteurs optiques (30),
**caractérisé en ce**
**que** le décalage entre les plaques de mesure disposées sur les côtés opposés l'un à l'autre de la bande de matière est déterminé par le biais d'une unité de mesure xy optique composée d'un détecteur optique 2x2 (35) dans l'une des plaques de mesure (26, 28) et d'une source de lumière (33) encastrée dans la plaque de mesure (26, 28) opposée.

2. Procédé selon la revendication 1, **caractérisé en ce que** les angles de basculement (37) déterminés au moyen de l'unité d'interprétation sont utilisés pour corriger la valeur de l'épaisseur de la bande de matière.

3. Procédé selon la revendication 1, **caractérisé en ce qu'**au moins trois capteurs optiques (30) espacés les uns des autres sont respectivement associés aux unités de mesure optiques (22, 24) disposées sur des côtés opposés l'un à l'autre de la bande de matière (20).

4. Procédé selon l'une des revendications précédentes, **caractérisé en ce que** l'écart entre les unités de mesure optiques (22, 24) disposées sur des côtés opposés l'un à l'autre de la bande de matière (20) est déterminé de manière magnétique.

5. Procédé selon l'une des revendications précédentes, **caractérisé en ce qu'**un coussin d'air (32) est généré entre chaque plaque de mesure (26, 28) associée à une unité de mesure optique (22, 24) correspondante et la bande de matière (20) afin de maintenir les unités de mesure (22, 24) à distance de la bande de matière (20).

6. Dispositif de détermination sans contact de l'épaisseur d'une bande de matière (20), notamment une bande de matière fibreuse, notamment pour mettre en oeuvre le procédé selon l'une des revendications précédentes, doté d'un arrangement de détection qui comprend au moins deux unités de mesure optiques (22, 24) entre lesquelles peut défiler la bande de matière (20) et qui présentent respectivement une plaque de mesure (26, 28) sur leur côté faisant face à la bande de matière (20), l'écart par rapport à la bande de matière (20) des unités de mesure optiques (22, 24) disposées sur des côtés opposés l'un à l'autre de la bande de matière (20) pouvant à chaque fois être déterminé par le biais de celles-ci et l'épaisseur de la bande de matière (20) pouvant être déterminée au moyen d'une unité d'interprétation à partir des écarts déterminés entre ces unités de mesure optiques (22, 24) et la bande de matière (20) ainsi que l'écart entre ces unités de mesure optiques (22, 24) disposées sur des côtés opposés l'un à l'autre de la bande de matière (20), plusieurs capteurs optiques (30) espacés les uns des autres étant respectivement associés aux unités de mesure optiques (22, 24) disposées sur des côtés opposés l'un à l'autre de la bande de matière (20) et l'unité d'interprétation étant conçue pour déterminer les angles de basculement (37) des plaques de mesure (26, 28) par rapport à la bande de matière (20) à l'aide des valeurs mesurées obtenues par le biais des capteurs optiques (30),
**caractérisé en ce**
**qu'**il existe une unité de mesure xy qui se compose d'un détecteur 2x2 (35) dans l'une des plaques de mesure et d'une source de lumière (33) encastrée dans la plaque de mesure opposée et qui est conçue pour déterminer le décalage entre les plaques de mesure disposées sur les côtés opposés l'un à l'autre de la bande de matière.

7. Dispositif selon la revendication 6, **caractérisé en ce que** l'unité d'interprétation est conçue pour utiliser les angles de basculement (37) déterminés des plaques de mesure (26, 28) par rapport à la bande de matière (20) pour corriger la valeur de l'épaisseur de la bande de matière.

8. Dispositif selon l'une des revendications 6 ou 7, **caractérisé en ce que** les unités de mesure optiques (22, 24) disposées sur des côtés opposés l'un à l'autre de la bande de matière (20) comprennent respectivement au moins trois capteurs optiques (30) espacés les uns des autres.

9. Dispositif selon l'une des revendications 6 à 8, **caractérisé en ce que** des moyens sont prévus pour déterminer de manière magnétique l'écart entre les unités de mesure optiques (22, 24) disposées sur des côtés opposés l'un à l'autre de la bande de matière (20).

10. Dispositif selon l'une des revendications 6 à 9, **caractérisé en ce que** des moyens sont prévus pour générer un coussin d'air (32) entre chaque plaque de mesure (26, 28) associée à une unité de mesure optique (22, 24) correspondante et la bande de matière (20) et pour maintenir ainsi les unités de mesure (22, 24) à distance de la bande de matière (20).
